# EUROPEAN PATENT SPECIFICATION

(11) **EP 4 343 065 B1**
(45) Date of publication and mention of the grant of the patent: **16.09.2026**
(21) Application number: 24157438.3
(22) Date of filing: 15.12.2021
(51) Int. Cl.: E02D 7/16, E02D 13/04, E02D 27/52, E02B 17/00

(54) **PILE HOLDING SYSTEM CONFIGURED TO BE MOUNTED ON A VESSEL**
PFAHLHALTERSYSTEM FÜR DIE MONTAGE AUF EINEM SCHIFF
SYSTÈME DE MAINTIEN DE PIEUX CONFIGURÉ À ÊTRE MONTÉ SUR UN NAVIRE

(30) Priority: 17.12.2020 NL 2027149; 04.08.2021 NL 2028920
(43) Date of publication of application: 27.03.2024
(62) Document number(s) of the earlier application(s) in accordance with Art. 76 EPC: 21839929.3 / 4 208 607
(73) Proprietor: Itrec B.V., 3115 HH Schiedam (NL)
(72) Inventor: ROMEIJN, Eric, 3115 HH Schiedam (NL); WETERINGS, Hendrikus Jacobus, 3115 HH Schiedam (NL)
(74) Representative: EP&C

(56) References cited:
- WO-A2-2019/125172
- WO-A2-2019/172752
- JP-A- H0 925 630

## Description

The present invention relates to a pile holding system, configured to be mounted on a vessel, e.g. for installation of a pile adapted to support an offshore wind turbine, e.g. a monopile, and to a method for installation of a pile of an offshore wind turbine.

For example, WO2019125172 discloses an X-Y motion supported pile holder having rails extending in the X-direction and rails extending in the Y-direction. The pile holder is supported on these rails by wheels. As the load on the wheels is very large, these wheels are commonly designed with a large diameter in view of stress distribution and friction. JP H09 25 630 discloses a pile holding system according to the preamble of independent claim 1.

In the case of a pile holder, the load supported on the rails increases in particular because there is a trend towards larger piles to be held by the pile holder as there is a trend towards larger offshore wind turbines. Hence, it is expected that in the near future piles need to be installed that are longer than 100 metres, possibly 120 metres or more. The weight of such piles may be more than 1000mt, possibly 1300mt or even more.

The first aspect of the present disclosure aims to provide an improved assembly for supporting an object on a rail, e.g. in view of ever increasing requirements, e.g. in the field of pile holding for installation of a foundation pile for an offshore wind turbine.

The first aspect of the disclosure provides an assembly for supporting an object on a rail whilst the object moves along the rail, wherein the assembly comprises a load bearing housing for carrying the object,
wherein the assembly comprises an endless chain of steel cylindrical rollers, which are arranged for recirculating along a closed path around a steel raceway member and a steel central body of the assembly which central body is attached to or integral with the load bearing housing, the path including
   - a work portion defined by a flat load bearing surface of the steel raceway member of the assembly, in which work portion an operative set of the cylindrical rollers engages the rail, and
   - a return portion defined by a return surface of the steel central body of the assembly in which a remaining set of the cylindrical rollers is free from the rail, e.g. the return portion having a section which is parallel to the work portion,
wherein the assembly comprises an elastically compressible resilient insert, e.g. containing a plastic material, which resilient insert is sandwiched between the steel central body and the steel raceway member above the work portion, so that the central body is resiliently supported on the operative set of the cylindrical rollers via the insert and the steel raceway member.

When the assembly is used in conjunction with the X-Y motion support of a pile holder, as in preferred embodiments of the first aspect of the disclosure, an advantage is that the effective height of the X-Y motion support for the pile holder can be reduced as no longer use is made of large diameter wheels for this purpose. This improves stability of the support of the load on the vessel and of the vessel including the load, e.g. so that control of the positioning thereof becomes easier. Furthermore, the rails are no longer subject to unfavourable localized mechanical loading at the relatively small interface between a wheels and the rail. This may allow to reduce the requirements on the mechanical properties of the rails. Also, compared to the known arrangement of large diameter wheels, the assembly may provide a smooth movement of the load along the rails. For example, stick-slip effects may be reduced to the benefit of control of accurate dynamic positioning of the pile holder, which becomes increasingly more challenging as the weight to be handled (e.g. of the pile) is larger.

The rail may be mounted or mountable to a surface, e.g. on top thereof, e.g. on a vessel, e.g. to a deck thereof, whilst the object is able to move along the rail. The rail may be mounted to the surface via another such rail, as is for example the case in an embodiment of a construction according to the first aspect of the disclosure which will be discussed later. The rail may alternatively be mounted or mountable to extend sideways, or be suspended to support the object from above. The term 'on' is to be interpreted to include such configurations.

The assembly comprises a load bearing housing for carrying the object on the assembly, e.g. for mounting the object to the assembly. By carrying the object, and engaging with the rail, the assembly supports the object on the rail. In embodiments, the assembly is suitable for supporting the object on multiple rails, for example two parallel rails.

The assembly comprises an endless chain of steel cylindrical rollers, which are arranged for recirculating along a closed path defined by the assembly. For example, between 20 and 25 cylindrical rollers are arranged in the endless chain. The chain is formed by a row of the steel cylindrical rollers, the rotation axes thereof being parallel to each other, as is known in the art.

For example, the cylindrical rollers may be physically interconnected, or push each other forward via intermediate elements between adjacent rollers.

The closed path runs around a steel raceway member and a steel central body. Thus the steel raceway member and the steel central body form an inner circumference of the closed path. The path includes a work portion and a return portion. The work portion is defined by a load bearing surface of the raceway member of the assembly, in which work portion an operative set of the cylindrical rollers engages the rail. Thereby, the work portion supports the load of the object on the rail. The load bearing surface is generally smooth, and the raceway member having this surface is non-resilient, as it is made of steel. The cylindrical rollers also being made of steel, makes that friction between the cylindrical rollers and the load bearing surface is minimized. In the return portion, defined by a return surface of the steel central body, a remaining set of the cylindrical rollers is free from the rail. Thus, no cylindrical rollers of the remaining set engage the rail, and thus support the object on the rail. This may be achieved by having the return surface run, at a front and rear side of the load bearing surface, directly upwards from the load bearing surface. In an example the return portion has a section which is parallel to the work portion.

In operation, that is, when the object and the assembly moves in a longitudinal direction of the rail, the operative set of the cylindrical rollers moves along the work portion of the closed path in the opposite direction of this movement direction. In doing so, the cylindrical rollers roll over the rail and over the load bearing surface. In the return portion of the closed path, the cylindrical rollers move from the side of the work portion where the cylindrical rollers exit the work portion, along the return portion to the side of the work portion where the cylindrical rollers enter the work portion. In doing so, the cylindrical rollers roll over the return surface.

A practical shape of the closed path has a work portion that runs longitudinally along a plurality of cylindrical rollers, for example 6 - 10 cylindrical rollers, and runs along a top surface of the rail when the assembly engages with the rail, and has a straight part of the return portion, e.g. of equal length, that is above and parallel to the work portion. The straight part of the return portion and the work portion may be interconnected by semi-circular front and back portions of the closed path. Or, for example, the closed path is in the shape of a rounded rectangle with the long sides being formed by the work portion and the straight part of the return portion.

The engagement of the rails by the assembly may be only from above, however it is preferred that the assembly limits also the movement of the assembly with respect to the rail in the lateral direction of the rail. In an embodiment, the cylindrical rollers may be slightly concave. The lateral movement relative to the rail may for example also be limited by providing one or more elements, e.g. rollers or wheels with a vertical rotation axis, which engage the rail laterally. These may be mounted to or integral with the assembly.

The cylindrical rollers may have a hardened surface to further reduce friction at the interfaces thereof with the rail and the load bearing surface.

According to the first aspect of the disclosure, the assembly comprises an elastically compressible resilient insert between the steel central body and the steel raceway. The central body is resiliently supported via the insert on the operative set of the cylindrical rollers.

The insert may, for example, be an elastically compressible resilient plate, on top of which the load bearing body is attached.

The central body is, preferably, attached to the resilient insert directly on top thereof.

A second aspect of the disclosure relates to a pile holding system configured to be mounted on a vessel, e.g. for installation of a pile adapted to support an offshore wind turbine, e.g. a monopile,
The pile holding system according to the second aspect of the disclosure comprises:
- a support assembly configured to be mounted on the vessel, e.g. on a deck of the vessel,
- a pile holder mounted on the support assembly, wherein the pile holder is configured to hold a pile in a vertical orientation,

wherein the pile holder comprises at least one ring, which is provided with multiple pile engaging devices distributed about a circumference of the ring, each pile engaging device being adapted to engage an exterior of a pile extending through the ring, e.g. each pile engaging device comprises one or more pile guiding rollers,
wherein the ring comprises a ring base that is secured to the support assembly and one or more pivotal jaws, e.g. two semi-circular jaws, each jaw being pivotally mounted at an inner end thereof to the ring base and having an outer end, the one or more jaws being movable between a closed position, wherein the respective ring forms a closed annulus, and an opened position, wherein an opening is present allowing for introduction of the pile into the pile holder.

Typically, pile holding systems are mounted on vessels for supporting and guiding a pile adjacent the vessel while the pile is lowered towards and/or is driven into the sea floor. A crane is used for upending the pile, i.e. tilting the pile from a horizontal transport position into a vertical position for being driven into the sea floor, and for introducing the pile into the ring of the pile holding system. The pile is introduced into the ring by slewing movement of the crane and/or by tilting movement of the boom of the crane.

For example, WO2019125172 discloses a pile holding system comprising a pile holder mounted on a support assembly, the support assembly being configured to be mounted on a deck of a vessel. The pile holder comprises a ring, which ring is provided with multiple pile engaging devices distributed about a circumference of the ring. Furthermore, the ring comprises a ring base, that is secured to the support assembly, and two semi-circular jaws, each jaw being pivotally mounted at an inner end thereof to the ring base. The jaws are movable between a closed position, wherein the respective ring forms a closed annulus, and an opened position, wherein an opening is present allowing for introduction of the pile into the pile holder.

An object of the second aspect of the disclosure is to provide a pile holding system that allows for a versatile use of the pile holding system.

According to the second aspect, the disclosure provides a pile holding system wherein the ring base of the ring and the support assembly are provided with cooperating releasable securing members that are configured to provide multiple distinct mounting angle positions, seen in plan view, of the ring relative to the support assembly.

Thus, with a pile holding system according to the second aspect of the disclosure, the ring can be mounted at multiple distinct mounting angle positions relative to the support assembly. This allows for a more versatile use of the pile holding system.

For example, the ring can be mounted in a mounting angle position for introducing piles upended at the left side of the pile holding system and in an alternative mounting angle position for introducing piles upended at the right side of the pile holding system. Thus, the allows for optimal use of the pile holding system independent of piles being upended at the left or at the right of the pile holding system.

A third aspect of the disclosure relates to a method for installation of a pile of an offshore wind turbine, wherein use is made of:
- a vessel having a hull with a deck and a side, e.g. a jack-up vessel,
- a crane erected on the deck of the vessel and having a boom that is slewable by a slew drive of the crane about a vertical slew axis and that is luffable about a boom axis by a luffing mechanism of the crane, which crane is configured to hoist and suspend the pile,
- an upending tool mounted on said deck of the vessel within reach of the crane,
- a pile holding system, distinct from said upending tool, mounted on said deck of the vessel within reach of the crane, the pile holding system comprising:
   - a support assembly configured to be mounted on the vessel, e.g. on a deck of the vessel,
   - a pile holder mounted on the support assembly, wherein the pile holder is configured to hold a pile in a vertical orientation,

wherein the pile holder comprises at least one ring, which is provided with multiple pile engaging devices distributed about a circumference of the ring, each pile engaging device being adapted to engage an exterior of a pile extending through the ring, e.g. each pile engaging device comprises one or more pile guiding rollers,
wherein the ring comprises a ring base that is secured to the support assembly and one or more pivotal jaws, e.g. two semi-circular jaws, each jaw being pivotally mounted at an inner end thereof to the ring base and having an outer end, the one or more jaws being movable between a closed position, wherein the respective ring forms a closed annulus, and an opened position, wherein an opening is present allowing for introduction of the pile into the pile holder,
wherein the method comprises:
   - upending of a pile using the upending tool to tiltable support a lower section of the pile and the crane to engage a lift an upper section of the pile, so that the pile is brought into vertical orientation at an upending position relative to the hull and suspended from the crane,
   - arranging the ring of the pile holding system so that the vertically suspended pile is laterally introducible into the opened annulus of the ring,
   - closing the one or more jaws of the ring,
   - lowering the pile onto the seabed and driving the pile into the seabed whilst the pile holder holds the pile in vertical orientation, characterized in that for said laterally introduction of the pile into the opened annulus of the ring, the upending tool and the ring of the pile holding system are arranged such that transfer of the vertically suspended pile by means of the crane from the upending position into the opened annulus of the ring solely involves operation of the slew drive of the crane so that the pile, seen in plan view, passes along a curved trajectory having a radius about the slew axis of the crane.

The method according to the third aspect of the disclosure, i.e. the transfer of the vertically suspended pile solely by operation of the slew drive of the crane so that the pile, seen in plan view, passes along a curved trajectory having a radius about the slew axis of the crane, significantly reduces complexity of said transfer, e.g. avoiding need to luff the boom during said transfer.

The fourth aspect of the disclosure relates to a pile holding system configured to be mounted on a vessel, e.g. for installation of a pile adapted to support an offshore wind turbine, e.g. a monopile, the pile holding system comprising:
- a support assembly configured to be mounted on the vessel, e.g. on a deck of the vessel,
- a pile holder mounted on the support assembly, wherein the pile holder is configured to hold a pile in a vertical orientation,

wherein the pile holder comprises at least one ring, which is provided with multiple pile engaging devices distributed about a circumference of the ring, each pile engaging device being adapted to engage an exterior of a pile extending through the ring during installation of the pile into the seabed, e.g. each pile engaging device comprises one or more pile guiding rollers,
wherein the ring comprises a ring base that is secured to the support assembly and one or more pivotal jaws, e.g. two semi-circular jaws, each jaw being pivotally mounted at an inner end thereof to the ring base and having an outer end, the one or more jaws being movable between a closed position, wherein the respective ring forms a closed annulus, and an opened position, wherein an opening is present allowing for lateral introduction of a vertically suspended pile into the opened annulus of the ring,
wherein the ring base is provided, in addition to one or more of said multiple pile engaging devices, with one or more distinct bumper devices that are configured to act as a bumper for the pile when being introduced laterally into the opened annulus of the ring,
wherein the one or more bumper devices are each embodied with a mobile bumper member and an associated bumper actuator, each bumper device being configured to move the bumper member into an operative position that is inward of the one or more pile engaging devices on the ring base so that the pile stays dear of said one or more pile engaging devices during said lateral introduction and that each bumper device being configured to move the bumper member into a non- operative position that is outward of the one or more pile engaging devices on the ring base so that the pile is positionable by means of the pile engaging devices. In an embodiment, each mobile bumper member comprises a bumper beam that is at one end pivotally secured to the ring base about a vertical axis, and wherein the actuator is configured to pivot the bumper beam relative to the ring base.

JP H09 25630 discloses a pile holding system according to the preamble of claim 1. In this system, in an embodiment, the ring is movably supported as the ring base is allowed to swivel about a cylindrical portion of the support assembly.

The invention according to claim 1 relates to a pile holding system, configured to be mounted on a vessel, e.g. for installation of a pile adapted to support an offshore wind turbine, e.g. a monopile, the pile holding system comprising:
- a support assembly configured to be mounted on the vessel, e.g. on a deck of the vessel,
- a pile holder supported by the support assembly, wherein the pile holder is configured to hold a pile in a vertical orientation,

wherein the pile holder comprises at least one ring, which ring is provided with multiple pile engaging devices distributed about a circumference of the ring, each pile engaging device being adapted to engage an exterior of a pile extending through the ring, e.g. each pile engaging device comprises one or more pile guiding rollers,
wherein the ring comprises a ring base and one or more pivotal jaws, e.g. two semi-circular jaws, each jaw being pivotally mounted at an inner end thereof to the ring base and having an outer end, the one or more jaws being movable between a closed position, wherein the respective ring forms a closed annulus having a central axis, and an opened position, in which an opening is present allowing for introduction of the pile into the pile holder,
wherein the ring base is movably supported by the support assembly, such that the ring can rotate about the central axis relative to the support assembly, to thus adjust the position of the opening of the ring relative to the support assembly, and wherein the ring is provided with a semi-circular track, having a center that coincides with the central axis of the ring, wherein the semi-circular track is received in a guide mounted on the support assembly, such that by moving the track through the guide, the ring is rotated about the central axis.

With a pile holding system according to the invention, the position of the ring can be adjusted while the ring remains mounted to the support assembly. This in contrast with a pile holding system according to the second aspect of the invention, wherein adjusting the position of the ring requires the ring to be disconnected from the support assembly, and thus does not allow for reportioning the ring while a pile is received in the ring.

The pile holding assembly according to the invention provides the same benefits as the pile holding system according to the second aspect of the disclosure, and can advantageously be used with a method according to the third aspect of the disclosure.

In an embodiment according to the second aspect of the disclosure, the cooperating releasable securing members comprise first securing members, e.g. eye members, integral with the ring base and located at multiple distinct angle positions, e.g. at three distinct angle positions, seen in plan view, and second securing members, e.g. eye members, integral with the support assembly and located at multiple distinct angle positions, e.g. at two distinct angle positions, seen in plan view, so as to allow for three distinct mounting angle positions of the ring relative to the support assembly.

In an embodiment according to the second aspect of the disclosure, the cooperating releasable securing members comprise first eye members integral with the ring base, and second eye member integral with the support assembly, and the cooperating releasable securing members comprise pins that are configured to be fitted through a set of aligned first and second eye members.

In an embodiment according to the second aspect of the disclosure, the support assembly is an X-Y motion compensation support assembly that is configured to provide compensation for motion of the vessel in a plane of the ring to maintain a predetermined X-Y location of the pile holder independent of motion of the vessel.

In an embodiment according to the second aspect of the disclosure, the support assembly comprises one or more first rails to be mounted on, or mounted on the vessel, e.g. on a deck of the vessel, a positioning frame movably supported on said one or more first rails in a first direction, where the positioning frame is provided with one or more second rails extending in a second direction, e.g. perpendicular to the first direction, and a support frame movably supported on said one or more second rails in said second direction, wherein the ring base of the ring of pile holder and the support frame are provided with said cooperating releasable securing members that are configured to provide multiple distinct mounting angle positions, seen in plan view, of the ring relative to the support frame.

In an embodiment according to the second aspect of the disclosure, the pile holding system is further embodied with one or more bumper devices as disclosed herein with reference to the fourth aspect of the disclosure, and/or embodied as described herein with a support assembly according to the first aspect of the disclosure.

It is furthermore submitted that, for example on multi-purpose vessels, pile holding systems are often configured to be temporarily mounted on the deck of the vessel. The pile holding system can thus be removed from the vessel when the vessel is to be used for business other than installation of piles, for example when the vessel is used for transporting and installation of foundations in the form of jackets.

Providing the pile holding system with distinct mounting angle positions of the ring relative to the support assembly allows for the pile holding system to be mounted at different positions relative to a crane, i.e. the crane for supporting a pile to be guided by the pile holding system, with the ring in an optimal introduction position, i.e. a position that allows for the crane to introduce the pile into the ring by only slewing the crane or by only tilting the boom of the crane, or by mainly slewing of the crane or by mainly tilting the crane in combination with a minimum of tilting of the boom or a minimum of slewing of the crane respectively.

For example, the disclosure enables a pile holding system that can be mounted on opposite sided of a crane, wherein the ring, more in particular the opening of the ring when the one or more pivotable jaws of the ring are in the opened position, can face towards a pile being moved by the crane from an upending position towards the pile holding system.

In an embodiment according to the second aspect of the disclosure, the ring can be mounted in the support assembly in a central position, in which the opening faces away from the support assembly and the ring base is positioned between the opening and the support assembly, in a left facing, or counter clockwise, position, in which the opening of the ring faces towards the left of the central position when seen in pan view, and in a right facing, or clockwise, position, in which the opening of the ring faces towards the right of the central position when seen in pan view.

In an embodiment according to the second aspect of the disclosure, the cooperating releasable securing members are configured to quickly disconnect and to thus separate the ring from the support assembly. For example, in case the vessel on which the pile holding system is to be moved away from the pile quickly. In an embodiment, the cooperating releasable securing members are explosive bolts.

In an alternative embodiment, the ring and/or the support assembly are configured to quickly disconnect from the releasable securing members, to thus quickly separate the ring form the support assembly. For example, in an embodiment the releasable securing members comprise eyes mounted to a beam that is part of the support assembly, which beam can be quickly disconnected from the support assembly, for example is mounted to the support assembly with explosive bolts.

In a further embodiment according to the second aspect of the disclosure, the releasable securing members and/or the support assembly are furthermore configured to push the ring away from the support assembly, and thus push the ring away from the vessel, once the ring is disconnected from the support assembly or just prior to the ring being disconnected from the support assembly.

For example, in an embodiment, the support assembly comprises one or more rails that, when the holding system is mounted on a vessel, extend substantially perpendicular to an edge of the vessel, i.e. an edge of the deck onto which the pile holding system is mounted, and a top part of the support assembly, the top part comprising the cooperating releasable securing members, is movably supported on the rails. Furthermore, a drive is provided to move the top part of the support assembly along the track. Thus, the top part of the support assembly can be moved in a direction perpendicular to the edge of the deck of the vessel to thus move the ring away from the deck of the vessel, i.e. away from the vessel. In addition or as an alternative pushing means can be provided in the form of electric spindles, hydraulic cylinders, etc configured for pushing the ring away from the support assembly

According to the second aspect, the disclosure furthermore provides a pile holding system comprising:
- a support assembly configured to be mounted on the vessel, e.g. on a deck of the vessel,
- a pile holder mounted on the support assembly, wherein the pile holder is configured to hold a pile in a vertical orientation,

wherein the pile holder comprises at least one ring, which is provided with multiple pile engaging devices distributed about a circumference of the ring, each pile engaging device being adapted to engage an exterior of a pile extending through the ring, e.g. each pile engaging device comprises one or more pile guiding rollers,
wherein the ring comprises a ring base that is secured to the support assembly and one or more pivotal jaws, e.g. two semi-circular jaws, each jaw being pivotally mounted at an inner end thereof to the ring base and having an outer end, the one or more jaws being movable between a closed position, wherein the respective ring forms a closed annulus, and an opened position, in which an opening is present allowing for introduction of the pile into the pile holder, and
wherein the ring base of the ring and the support assembly are provided with cooperating releasable securing members that are configured to quickly disconnected, to thus disconnect the ring from the support assembly, and
preferably wherein the releasable securing members and/or the support assembly are furthermore configured generate a pushing force, to push the ring away from the support assembly, and thus away from the vessel, once the ring is disconnected from the support assembly or just prior to the ring being disconnected from the support assembly.

The second aspect of the disclosure also relates to a vessel, e.g. a jack-up vessel, provided with a pile holding system, e.g. for installation of a pile adapted to support an offshore wind turbine, e.g. a monopile.

The second aspect of the disclosure also relates to a method for installation of a pile of an offshore wind turbine, wherein use is made of:
- a vessel having a hull with a deck and a side, e.g. a jack-up vessel,
- a crane erected on the deck of the vessel and having a boom that is slewable by a slew drive

of the crane about a vertical slew axis and that is luffable about a boom axis by a luffing mechanism of the crane, which crane is configured to hoist and suspend the pile,
   - a pile holding system according to the second aspect of the disclosure,
wherein the method comprises lateral introduction of the pile when suspended vertically from the crane into the opened annulus of the ring.

In an embodiment according to the third aspect of the disclosure, the upending tool is mounted on said deck of the vessel on one side of the
crane, within reach of the crane, and wherein the pile holding system is mounted on said deck of the vessel on another side of the crane, within reach of the crane.

In an embodiment according to the third aspect of the disclosure, the support assembly is provided with a ring positioning system configured to move the ring relative to the crane of the vessel in a direction parallel to the edge of the vessel and perpendicular to the vessel, to enable the support assembly to position the ring relative to the crane in a position that matches with a slewing movement of the crane that originates at a upending device. Thus, the position of the ring can be adjusted to fit the slewing movement of the crane, the slewing movement of the crane moving a pile from an upending device to the pile holding system, originating at an alternative or repositioned upending device. therefore it is not necessary to reposition the support assembly.

For example, in an embodiment according to the third aspect of the disclosure, the pile holding system is set up in front of the crane, i.e. between the crane and the side of the vessel with the ring mounted to the support assembly for receiving piles from a upending device set up at the left of the crane. In this embodiment, the ring is mounted on the support assembly in a position with the opening of the ring facing towards the left of the crane. When subsequently an upending device set up at the right of the crane is to be used, the ring of the pile holding system is remounted on the support assembly such that the opening of the ring now faces towards the right of the crane. In addition, the ring positioning system may adjust the position of the ring such that a pile can be moved form the upend device and introduced into the ring of the pile holding system by a slewing movement of the crane only. In a further embodiment, for use with a floating vessel, the support assembly comprises a positioning system that is configured to position the ring of the pile holding system relative to the vessel while guiding a pile, to compensate for movement of the vessel, i.e. sea induced movements of the vessel, relative to the pile installation site, i.e. to location where the pile is to be driven into the sea floor. Preferably, in such an embodiment, the positioning system is configured for, i.e. comprises a range of movement that is sufficient for, adjusting the position of the ring to fit a pile introduction trajectory originating with an alternative or repositioned upending device and for correcting for movement of the vessel relative to the pile installation site.

In a further method according to the third aspect of the disclosure, use is made of a pile holding system according to the second aspect of the disclosure.

In a further embodiment, a method according to the third aspect of the disclosure comprises:
- mounting the support assembly of the pile holding assembly on the deck of the vessel, and mounting the ring of the pile holding system on the support assembly in a position for introducing the pile into the ring by only slewing the crane.

In an embodiment the ring base is provided with two bumper devices, each bumper device comprising a bumper beam that is at one end pivotally secured to an end portion of the ring base about a vertical axis, so that the free ends of the bumper beams are directed towards one another seen in plan view, and wherein the actuator is configured to pivot the bumper beam relative to the ring base.

In an embodiment, seen in plan view, each bumper beam has a front side facing the pile that comprises a first front side portion and a second front side portion that are inclined relative to one another.

The fourth aspect of the disclosure also relates to a vessel, e.g. a jack-up vessel, provided with a pile holding system, e.g. for installation of a pile adapted to support an offshore wind turbine, e.g. a monopile.

The fourth aspect of the disclosure also relates to a method for installation of a pile of an offshore wind turbine, wherein use is made of:
- a vessel having a hull with a deck and a side, e.g. a jack-up vessel,
- a crane erected on the deck of the vessel and having a boom that is slewable by a slew drive of the crane about a vertical slew axis and that is luffable about a boom axis by a luffing mechanism of the crane, which crane is configured to hoist and suspend the pile,
- a pile holding system according to the fourth aspect of the disclosure,
wherein the method comprises lateral introduction of the pile when suspended vertically from the crane into the opened annulus of the ring, wherein the one or more bumper devices in their operable position act as a bumper for the pile, e.g. avoiding any collision between the pile and the one or more pile engaging devices rnounted on the ring base.

It is submitted that the bumpers according to the fourth aspect of the disclosure can also be used in a ring of a pile holding system according to the second aspect of the disclosure or to the invention, or in a ring that is used in a method according to the fourth aspect of the disclosure.

In an embodiment of a pile holding system according to the invention, the ring can be rotated about the central axis over an angle of at least 40 degrees, preferably of at least 60 degrees.

In an embodiment of a pile holding system according to the invention, the ring can be rotated about the central axis from a central position, in which the opening faces away from the support assembly and the ring base is positioned between the opening and the support assembly, towards the left, i.e. counter clockwise when seen in plan view, over an angle of at least 20 degrees, preferably of at least 30 degrees, for example of at least 40 degrees, and towards the right, i.e. clockwise when seen in plan view, over an angle of at least 20 degrees, preferably of at least 30 degrees, for example of at least 40 degrees.

In a further embodiment of a pile holding system according to the invention, the ring can be rotated over an angle of one hundred and eighty degrees. Such an embodiment allows for introducing a pile on one side of the pile holding system, for example by introducing the pile into the ring from the left side of the pile holding system, in a direction parallel to the side of the vessel, and for removing the pile from the ring towards the right of the pile holding assembly, also in a direction parallel to the side of the vessel.

In a further embodiment of a pile holding system according to the invention, the support assembly is mounted on a semi-circular track, which semi-circular track is configured to be mounted or is mounted on the deck of a vessel, wherein the semi-circular track is has a center that coincides with the central axis of the ring of the pile holding system.

In an embodiment of a pile holding system according to the invention, the pile engagement devices of the pile holding system are mounted on semi-circular tracks provided on the ring. Thus, the pile engagement holding devices can be moved relative to the ring, about the central axis of the ring. Such an embodiment allows for moving the pile engagement devices of the ring in a counter clockwise direction relative to the ring, while the ring is rotated clockwise, or vice versa respectively. Thus, the opening of the ring can be repositioned, for example can be moved relative to the support system from a left facing position towards a right facing position, while the pile engagement device maintain there position relative to the pile support system. Thus, the ting can be repositioned while a pile received in the ring maintains it position, i.e. is not rotated about its vertical axis.

In the drawings,
- figures 1a,b: illustrate, in a side view, a combination according to the first aspect of the disclosure, respectively in a stowed position and an operational position,
- figure 1c: illustrates, in a top view with a detail, the same combination,
- figures 2a,b: illustrate, in a top and side view, a combination according to the first aspect of the disclosure,respectively in a stowed position and an operational position,
- figures 3a,b: illustrate, in a side view, a longitudinal cross-section through an assembly according to the first aspect of the disclosure,
- figure 4: illustrates in the view of figure 3a, the same assembly in operation on a rail,
- figure 5: illustrates in a top view, the same assembly,
- figure 6: illustrates in a side-cross-sectional view, two of the assemblies according to the first aspect of the disclosure in series being used in a combination according to the first aspect of the disclosure,
- figure 7: illustrates, in a front view, a lateral cross-section of the assembly,
- figure 8: illustrates, in a front view, a lateral cross-section of a system according to the first aspect of the disclosure,
- figure 9: illustrates, in a side view, a longitudinal cross-section through a system according to the first aspect of the disclosure,
- figure 10: illustrates a bottom view of the same system,
- figure 11: illustrates a vessel according to the disclosure and a method according to the first aspect of the disclosure,
- figure 12a-b: schematically illustrate exemplary constructions according to the first aspect of the disclosure. It is noted, that the figures are schematical representations of the first aspect of the disclosure, and may e.g. not all be true to nature or scale,
- fig. 13A: shows in plan view, an example of a pile holder system according to the second aspect of the disclosure in a first distinct mounting angle position of the ring relative to the support assembly,
- fig. 13B: shows in plan view, an example of a pile holder system according to the second aspect of the disclosure in a second distinct mounting angle position of the ring relative to the support assembly,
- fig. 13c: shows in plan view, an example of a pile holder system according to the second aspect of the disclosure in a third distinct mounting angle position of the ring relative to the support assembly,
- fig. 14: schematically shows in plan view part of a vessel with a crane and a pile holding system configured for a method according to the third aspect of the disclosure,
- fig. 15A: shows in plan view, an example of a pile holder system having bumper devices according to the fourth aspect of the disclosure,
- fig. 15B: illustrates the operation of the bumper devices of the pile holder system of figure 15A during lateral introduction of the pile,
- fig. 16: illustrates in different views a bumper device of the pile holder system of figure 15A, and
- fig. 17A,B: illustrates, in plan view, the operation of the bumper device of the pile holder system of figure 15A.

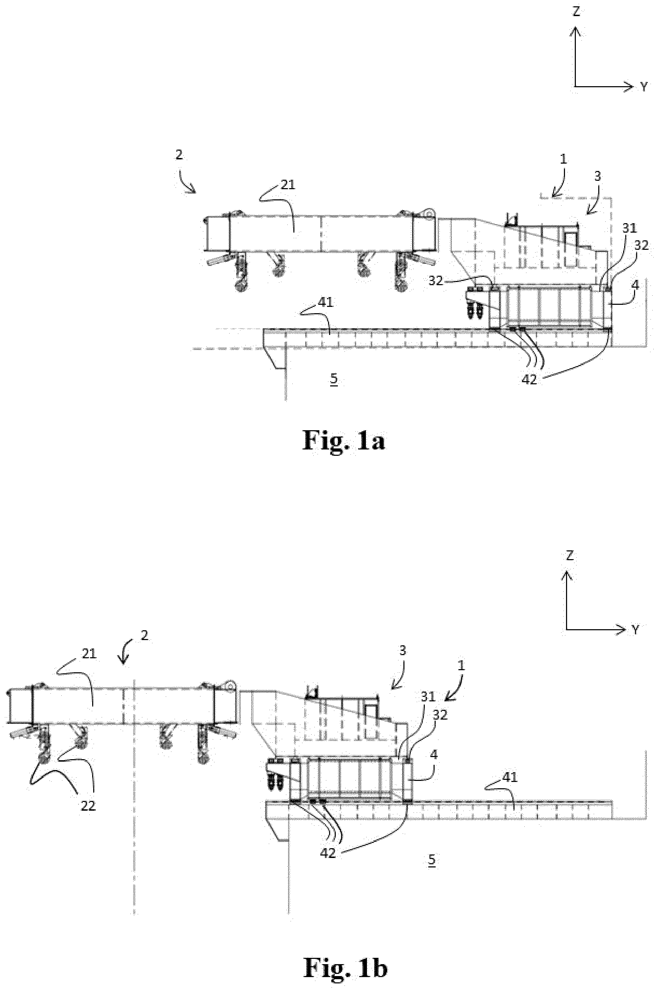

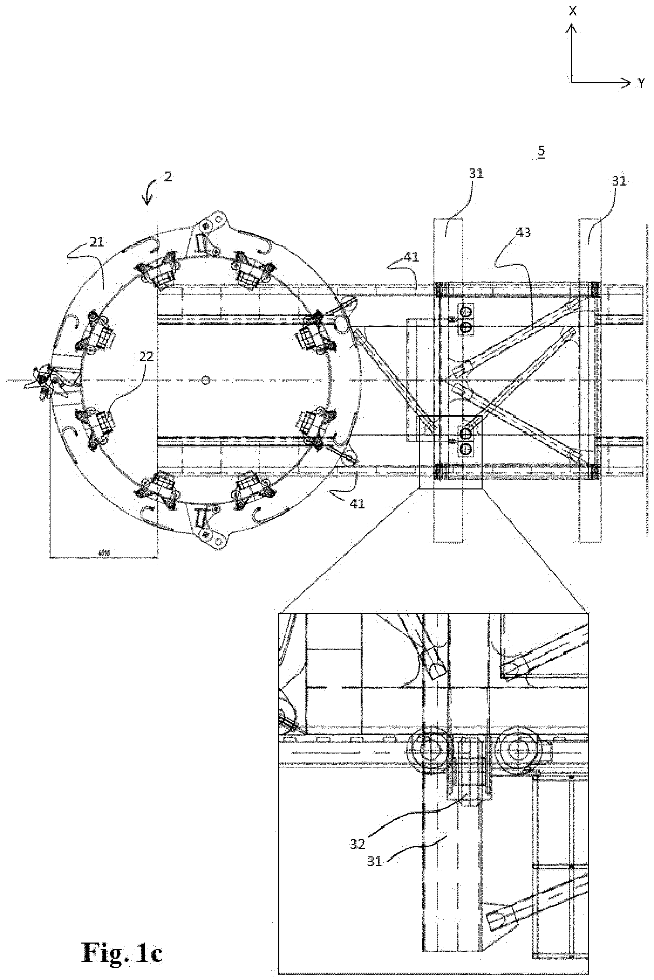

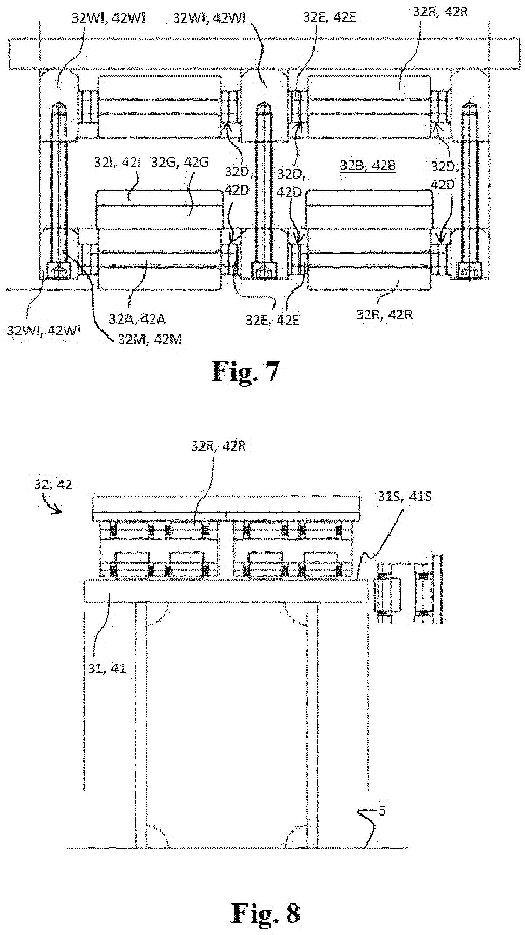

Figures 1a, 1b and 1c show an illustrative combination 1 according to the first aspect of the disclosure, namely a combination of an pile holding tool 2,3 and a construction 4,31,32,41,42 according to the first aspect of the disclosure. The tool is suitable for handling a pile 6, in particular a pile adapted to support an offshore wind turbine. The combination 1 is to be mounted on a vessel 5, as is shown in figure 7 for a jack-up vessel 5 which is suitable for handling and installing the pile at an offshore location next to the vessel. The combination 1 may however also be mounted on a floating vessel (not shown), e.g. suitable for such handling and installation of offshore structures.

The construction comprises a first and second system according to the first aspect of the disclosure. The first system comprises two parallel first rails 31 which extend in a first direction X, and multiple assemblies 32 according to the first aspect of the disclosure which each engage one of the rails 31. The second system comprises two parallel second rails 41 which extend in a second direction Y, which is perpendicular to the first direction, and multiple assemblies 42 which each engage one of the second rails 41.

The construction is configured to support the pile holding tool 2,3 on the one or more first rails 31 via the one or more first assemblies 32, and the one or more first rails 31 are supported on the one or more second rails 41 via the one or more second assemblies 42, onto which the first rails 31 are both mounted via a positioning frame 4. Thereby, the tool 2,3 is movable along the rails 31,41 of the construction in both the first and the second direction X,Y. The combination further comprises one or more actuators 43 for moving the tool 2,3 over the one or more rails 31,41. When mounted to the vessel 5 as in figure 7, the rails 31,41 may in particular extend in the X,Y direction of the vessel 5 as shown, respectively. Therein, moving the tool over the rails 31,41, moves the tool 2,3 relative to the vessel 5 in these directions.

The pile holding tool 2,3 supported on the construction comprises a support structure 3, which is mounted on the one or more assemblies 31,41, and a pile holder 2. The pile holder is mounted to the support structure 3, and comprises a ring 21. The pile holder 2 is configured to hold a pile 6 in at least a vertical orientation with that ring 21, as shown in figure 7. The ring 21 comprises multiple pile engaging devices 22 distributed about the circumference of the ring 21. Each pile engaging device 22 is adapted to engage an exterior of a pile 6 extending through the ring 21 and comprises one or more pile guiding rollers.

The combination 1 is configured to, when mounted to a vessel, maintain a predetermined X-Y location of the pile holder 2,3 independent of the motion of the vessel by the actuators moving the pile holder 2,3 over the one or more first rails 31 and the one or more second rails 41, and thus relative to the vessel. This is of particular use when the vessel is in floating condition and subject to motions of the sea, e.g. currents and waves, and wind. The combination may comprise an active motion compensating actuation system for moving the support structure 3 over the rails 31,41, and thus relative to the vessel.

As shown in figures 1a and 1b, the pile holding tool 2,3 is moveable along the one or more rails 31,41 between a stowed position (fig.1a) and an operational position (fig.1b). As may be envisaged from figure 7, when the combination 1 is mounted to a vessel 5 in the manner as shown, in the stowed position (fig.1a) the ring 21 of the pile holder 2 extends, seen in the X-Y plane of the vessel 5, within the contour of the vessel 5, and in the operational position (fig.1b) the ring 21 extends, seen in the X-Y plane of the vessel 5, outboard the vessel 5. In the operation position, a pile 6 can be lowered through the ring 21 while being held by the pile engaging devices 22.

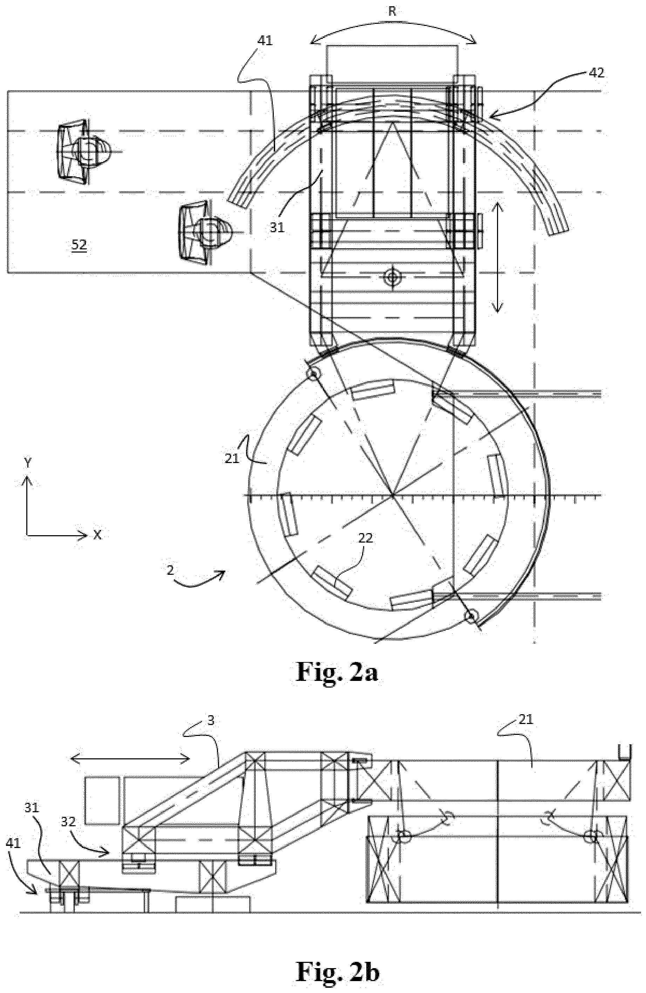

Figures 2a and 2b illustrate a combination 1 according to the first aspect of the disclosure wherein a similar pile holding tool 2,3 as shown in figs.1a-c is supported on first rails 31, which are straight, and enable the stowed and operational position alike in figs.1a-b. The second rail 41 is curved, forming a circle segment, for enabling rotation of the pile holding tool 2,3 supported thereon relative to the deck 51. A pile holder being supported on such straight rails, on top of curved rails, is known from the non-prepublished application NL2028124 by the applicant, along with the possibilities for movement of the pile holder along these rails.

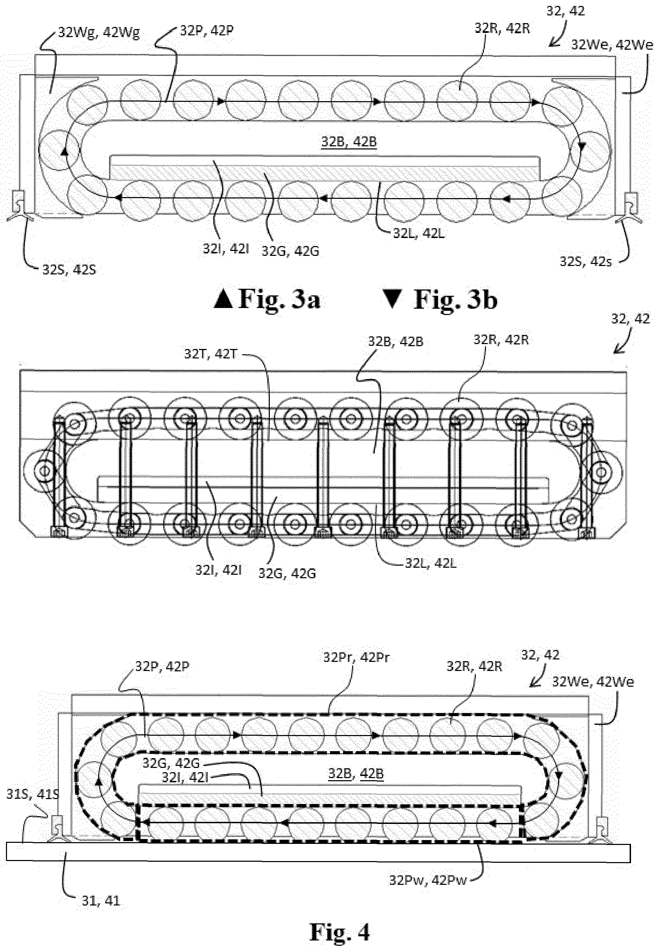

Figures 3a and 3b show a single one of the assemblies 32,42 by means of which the pile holding tool 2,3 is supported on the rails 31,41. Both an assembly 32 onto which the support structure 3 of the tool 2,3 is mounted, and an assembly 42 onto which the positioning frame 4 is mounted, may be embodied as shown. Therefore, the indications in the figures refer both to an embodiment of an assembly 32 and of an assembly 42.

The assembly 32 or 42 comprises a load bearing housing 32H or 42H, with a top plate for carrying the tool 2,3 on the assembly 32 or 42.

The assembly 32,42 comprises an endless chain of steel cylindrical rollers 32R,42R, which are arranged for recirculating along a closed path 32P,42P around a steel raceway member 32G,42G and a steel central body 32B,42B of the assembly 32,42. The steel central body 32B, 42B is attached to the load bearing housing 32H, 42H via a number of elongate mounting elements, namely bolts 32M, 42M. The path 32P, 42P is indicated in figure 3a and figure 4. The path 32P,42P has a work portion 32Pw,42Pw defined by a flat load bearing surface 32L,42L of the steel raceway member 32G,42G of the assembly 32,42. The work portion 32Pw,42Pw is indicated in figure 4 by the dashed rectangle. In this work portion 32Pw,42Pw, an operative set of the cylindrical rollers 32R,42R engages the rail 31,41. The path 32P,42P also has a return portion 32Pr,42Pr which is defined by a return surface 32T, 42T of the steel central body 32B, 42B of the assembly. In the return portion a remaining set of the cylindrical rollers 32R,42R is free from the rail 31,41. The return portion 32Pr,42Pr has a section which is parallel to the work portion 32Pw,42Pw. The work portion 32Pw,42Pw and the parallel section of the return portion 32Pr,42Pr are connected at the front and rear side of the assembly 32,42 by a respective front and rear semi-circular section to form the complete closed path 32P,42P.

The return surface 32T,42T, see figure 3b, defines the return portion 32Pr,42Pr of the closed path 32P,42P. The return surface is formed by the steel out of which the central body 32B,42B is made. The load bearing surface 32L,42L and the return surface 32T,42T define, at the side of the cylindrical rollers 32R,42R, respectively the work portion 32Pw,42Pw and the return portion 32Pr,42Pr of the path 32P,42P. The semi-circular sections connecting the parallel sections of the path 32P,42P are at the opposite side of the path defined by the front and back guide walls 32Wg,42Wg, see figure 3a, figure 5 and figure 9.

The assembly 32,42 comprises a resilient insert 32I,42I in the form of a resilient plastic plate, e.g. made of a fibre reinforced plastic material, e.g. adapted for use in bearings. The central body 32B,42B via this resilient insert 32I,42I and the raceway member 32G,42G resiliently supported on the operative set of the cylindrical rollers 32R, 42R, see figures 3a,3b and 4. Thereto the resilient plate 32I, 42I is sandwiched between the central body 32B, 42B and the raceway member 32G, 42G above the work portion 32Pw, 42Pw of the path 32P,42P.

The raceway member 32G,42G is in the form of a raceway plate 32G,42G, and is alike the central body 32B,42B also made of steel. It guides the operative set of the cylindrical rollers 32R,32R between the load bearing surface 32L, 42L of the raceway plate 32G,42G and an upper surface 31S,41S of the rail 31,41. The raceway plate 32G,42G is disposed between the resilient insert 32I,42I and the operative set of the cylindrical rollers 32R,42R, and defines, at the side of the operative set of the cylindrical rollers 32R,42R, the work portion 32Pw,42Pw of the path 32P,42P. In the shown embodiment, The raceway plate 32G,42G and the resilient insert 32I,42I have the same dimensions in the axial plane and are stacked on top of each other such that their longitudinal and lateral edges axially coincide. The thickness of the raceway member 32G,42G is smaller than the thickness of the raceway member 32G,42G: it corresponds to around 60% of the thickness of the raceway member 32G,42G. The central body 32B,42B comprises a recess inside which the resilient insert 32I,42I and the raceway plate 32G,42G are contained and axially enclosed. The raceway plate 32G,42G is flush with the longitudinally adjacent return surface 32T,42T of the central body 32B,42B.

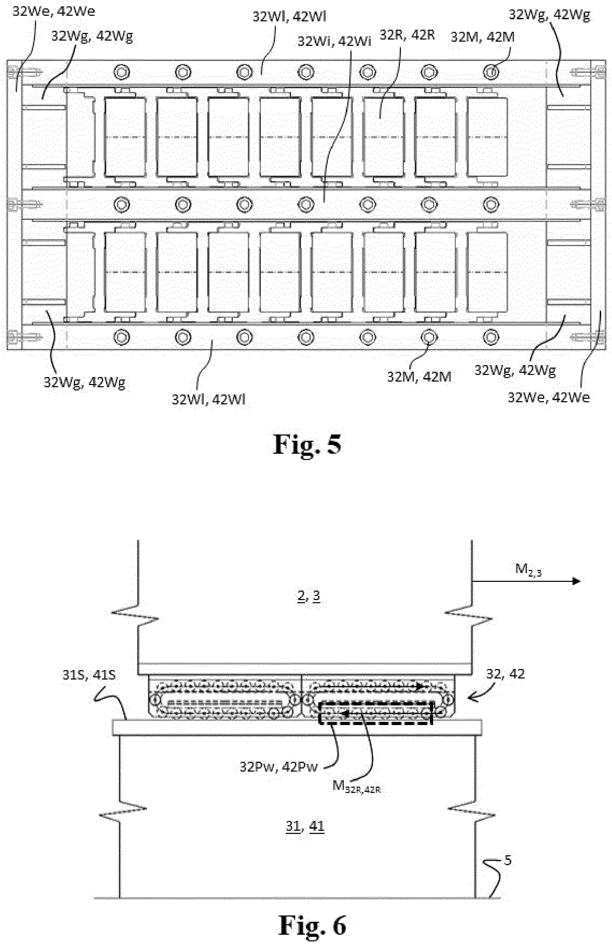

As illustrated in figures 5 and 7, an embodiment of an assembly 32,42 according to the first aspect of the disclosure may further comprise a second endless chain of linear recirculating cylindrical rollers 32R,42R, arranged for recirculating along a second closed path 32P,42P defined by the assembly 32,42. The two paths 32P,42P are laterally juxtaposed and parallel to one another. The second path 32P,42P, also includes a work portion 32Pw,42Pw in which an operative set of the cylindrical rollers 32R,42R engages the rail 31,41, and a return portion 32Pr, 42Pr in which a returning portion of the cylindrical rollers 32R,42R is free from the rail 31,41. The work portion 32Pw,42Pw of the second closed path 32P,42P is defined by a second load bearing surface of a second raceway member. The return portion of the second path 32P,42P is defined by a second return surface of the central body 32B, 42B. Thus the central body 32B,42B has in this embodiment two load bearing surfaces 32L,42L and two return surfaces 32T,42T defining the respective work portions 32Pw,42Pw and return portions 32Pr,42Pr, and is integral for association with both endless chains. The central body is here resiliently supported on the respective operative portions of the cylindrical rollers of both endless chains via the respective raceway members, a second resilient insert containing a plastic material being sandwiched between the central body (32B,42B) and the second raceway member.

The housing 32H,42H of the assembly 32,42 comprises a front and rear vertical end wall 32We,42We which extend laterally respectively at the front and rear side of the assembly, and a front and rear guide wall 32Wg,42Wg which are attached to respectively the front and rear end wall 32We,42We. The front guide wall 32Wg,42Wg defines a front section of the return portion 32Pr,42Pr of the closed path 32P,42P opposite the return surface 32T,42T, and the rear guide wall 32Wg,42Wg defines a rear section of the return portion of the closed path 32P,42P. The attachment is via multiple bolts which extend perpendicularly through the end walls and longitudinally stick into the guide walls.

In the embodiment with two endless chains, see figures 5,7 and 8, the housing 32H,42H comprises a second front guide wall and a second rear guide wall, which are attached to respectively the front and rear end wall 32We,42We and define respectively a front and rear section of the return portion of the second closed path 32P,42P opposite the second return surface 32T,42T.

As shown best in figure 7 for the embodiment with two endless chains of cylindrical rollers 32R,42R, the cylindrical rollers 32R,42R of the assembly 32,42 each rotate around a respective roller axis 32A,42A of which head ends 32E,42E run over respective treads 32D,42D formed by vertical protrusions from the central body 32B,42B extending longitudinally along the closed path 32P,42P at respective lateral sides of the closed path 32P,42P.

Figure 7 also shows that the assembly 32,42 comprises left upper and lower and right upper and lower longitudinal wall parts 32WI,42WI which form upper and lower vertical protrusions from the central body 32B,42B at the left and right ends thereof, and which extend longitudinally over at a least a length of the closed path 32P,42P. The left upper and lower wall part 32WI,42WI are interconnected via multiple bolts 32M,42M, see also figure 5, and the right upper and lower longitudinal wall parts 32WI,42WI are interconnected via multiple bolts as well. These bolts 32M,42M vertically extend inside the respective upper and lower longitudinal wall parts 32W1,42W1 and run through the respective lateral end of the central body 32B,42B. Figure 5 shows that the bolts 32M,42M are distributed longitudinally along the wall parts 32WI,42WI.

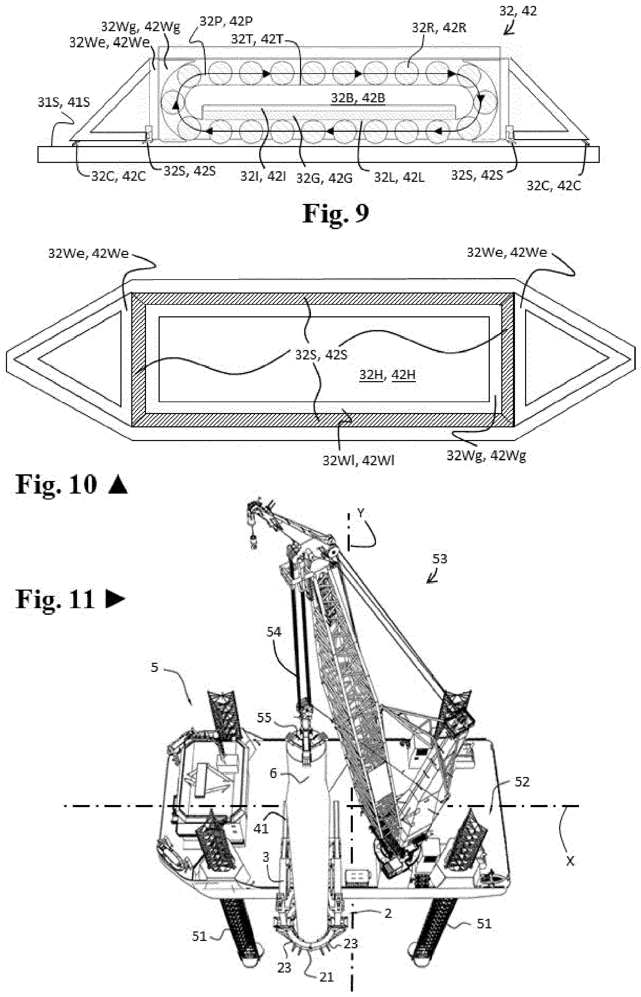

As indicated in the assembly 32,42 of figures 9 and 10 in a side and bottom view, and visible in figure 4 as well, the housing 32H,42H of the assembly 32,42 may be provided, at least around the work portion of the recirculating cylindrical rollers 32R,42R, with seals 32S,42S between the end walls 32We,42We and longitudinal wall parts 32WI,42WI, and the upper surface 31S,41S of the rail 31,41. The walls 32We,32Wl,42We,42Wl and the seals 32S,42S define between the load bearing surface 32L,42L and the upper surface of the rail 31,41 a grease chamber 32H,42H for the operative set of the recirculating cylindrical rollers 32R,42R. The seals 31S,32S may in a cross-section thereof be substantially V-shaped - see figure 4.

The assembly 32,42 with two endless chains further comprises intermediate upper and lower longitudinal wall parts 32Wi,42Wi, see figures 5 and 7, which form upper and lower vertical protrusions from the central body 32B,42B in between the two closed paths 32P,42P, and which extend longitudinally over at least a length of the closed path 32P,42P. The intermediate upper and lower longitudinal wall parts 32Wi,42Wi are interconnected via multiple bolts 32M,42M, which vertically extend inside the respective upper and lower longitudinal wall parts 32W1,42WI and through a central part of the central body 32B,42B.

Figure 5 shows that these bolts 32M,42M are distributed longitudinally along the wall part 32Wi,42Wi.

The longitudinal wall parts 32Wl,32Wi,42Wl,42Wi are each connected to the end walls 32We,42We via bolts which extend perpendicularly through the end walls 32We,42We and longitudinally stick into the longitudinal wall parts 32Wl,32Wi,42Wl,42Wi. This is visible in figure 5.

As may be verified in figures 3a and 3b, at a front and rear side of the load bearing surface 32L,42L, the return surface runs upwardly directly from the load bearing surface 32L,42L. Furthermore a frontmost and/or rearmost section of the raceway member 32G,42G slants slightly upwards towards the return surface. Note that the upward slants are very subtle.

As shown in figure 9 (side view) and figure 10 (bottom view), the assembly 32,42 according to the first aspect of the disclosure may be provided at a front and rear side, facing a longitudinal direction of the rail 31,41, with a scraper 32C,42C engaging the upper surface 31S,41S of the rail 31,41 for cleaning the rail 31,41. The housing 32H,42H thereto further comprises a front and rear frame which protrude respectively from the front and rear end wall 32We,42We in a frontward and rearward direction. The front and rear scraper 32C,42C are mounted underneath the respective frame at a longitudinal end thereof.

Figures 4,6 and 8 illustrate a system according to the first aspect of the disclosure of a rail and an assembly according to the first aspect of the disclosure.

Figure 8 schematically illustrates, that in addition to the top surface 31S,41S of the rail, also a side surface of the rail, e.g. both side surfaces, may be engaged by a corresponding lateral guidance part of the assembly, for limiting lateral motion of the assembly, and therewith of the object 2,3, in lateral directions of the rail 31, 41. For example, as shown, a lateral guidance part comprises a sliding bearing and/or a roller arrangement, e.g. depending on load requirements.

Figure 6 shows the use of two assemblies 32,42 in series, engaging a rail 31,41 mounted on a vessel 5, for supporting an object 2,3. The object is moving over the rail 31,41 in the indicated direction M_{2,3}, and the operative part of the cylindrical rollers 32R,42R moves in the opposite direction M_{32R,42R} in the work portion 32Pw,42Pw of the closed path 32P,42P of the cylindrical rollers. The resilient insert 32I,42I facilitates a resilient support of the object 2,3 on the cylindrical rollers 32R,42R, and thus on the rail 31,41 while the object 2,3 moves over the rail 31,41.

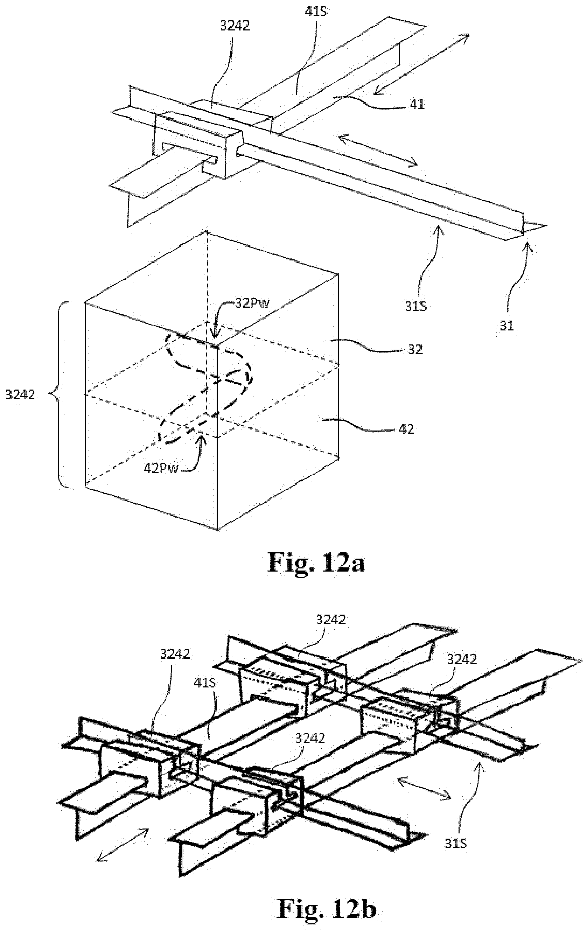

Figure 12a shows, schematically, an embodiment of a construction with a first rail 31 and a second rail 41, or parallel pairs of rails 31, 41 as illustrated in figure 12b. Herein the first rail(s) 31 are perpendicular to the second rail(s) 41. Also the first rail(s) 31 cross over the second rail(s) 31. A vertical spacing is present between each second rail 41 and first rail 31 at a crossing. For example, the second rail(s) 41 is stationary mounted to the hull of a vessel, e.g. to a deck of the vessel. For example, the first rail(s) 31 forms part of a tool of the vessel, e.g. a pile holder tool.

Other than in figures 1a-c and figure 2a-b, at the crossing of first and second rails 31, 41 first and second assemblies 32 and 42 are combined in a stacked unit 3242 that is provided in between the first and second rails 31,41.

The lower assembly 42 of the unit 3242 is configured to engage the second, lower rail 41. The upper assembly 32 of the unit 3242 is configured to engage the first, upper rail 31. Inherently, the work portion 32Pw of the first assembly 32 is directed towards the first rail 31, that is, upwards, and the work portion 42Pw of the second assembly 42 is directed to the second rail 41, that is, downwards, so that these work portions 32Pw and 42Pw engage, respectively, the bottom surface 31S of the first rail 31, and the top surface 41S of the second rail 41. Thus the work portion 32Pw and 42Pw form, respectively, a top portion and a bottom portion of the respective closed path 32P and 42P. This is shown in the schematic illustration of the unit 3242 below the construction, showing by dashed lines the closed paths 32P, 42P of the assemblies 32,42.

In the embodiment of figure 12a, the first and second rails 32,42 are both straight, extending perpendicularly to one another. When the second rail 41 is fixed to the deck 51, an object connected to the upper rail 31 may be moved in the direction of the first rail 31 since the first rail 31 is movable, and may be moved in the direction of the second rail 41 since the second rail 41 is movable - thus the unit 3242, and therewith rail 31 and the object, may be slid over the second rail 41.

In the schematic figure 12b, the same principle is applied to a construction of two parallel first rails 31 and two parallel second rails 42, wherein the same unit 3242 is provided between the rails at each crossing, so four times.

The figures, in particular figures 1a, 1b, 6, and 11, illustrate a method for handling an object on a vessel, comprising supporting an object 2,3, namely a pile holding tool 2,3, on the first rails 31 of the construction shown in figures 1a, 1b, and 1c, mounted to the vessel via the assemblies 32,42 of the combination. The support structure 3 of the pile holding tool 2,3 is mounted on the first assemblies 31, and support the pile holder 2, of which a ring 21 extends outboard of the vessel 5.

The method comprises moving the object 2,3, here the pile holding tool 2,3, along the one or more rails 31,41, and therewith, relative to the vessel. This moving involves for the assemblies 32,42, recirculating the endless chain of linear recirculating cylindrical rollers 32R,42R along the closed path 32P,42P defined by each assembly 32,42, the operative set of the cylindrical rollers 32R,42R engaging the rails and moving in a direction opposite to the movement of the pile holding tool 2,3.

The method further comprises:
- holding a pile, here a pile 6 adapted to support a wind turbine, namely a monopile, such that it extends in a vertical orientation through the ring 21 of the pile holder 2 of the pile holding tool 2,3, wherein pile engaging devices 22 distributed about the circumference of the ring 21 engage the exterior of the pile, and
- lowering the pile into a body of water on which the vessel 5 is floating while being held and guided by the pile engaging devices 22.

Although vessel 5 is a jack-up vessel in figure 11, the method is also envisaged to be executed on a floating vessel 5. In that case, the method preferably includes motion compensation to be executed at least during the lowering of the pile 6.

The movement of the pile holding tool 2,3 may furthermore be actuated such as to include:
- prior to at least the lowering of the pile 6, moving the pile holder 2,3 from a stowed position, see fig.1a, in which the a ring 21 of the pile holder 2 extends, seen in the X-Y plane of the vessel, within the contour of the vessel, to an operational position, see fig.1b, in which the ring 21 of the pile holder extends, seen in the X-Y plane of the vessel, outboard the vessel, and/or
- after at least the lowering of the pile and releasing the pile from the pile holder 2, including disengaging the pile engaging devices 22 from the pile, moving the pile holder 2,3 from the operational position fig.1b to the stowed position fig.1a.

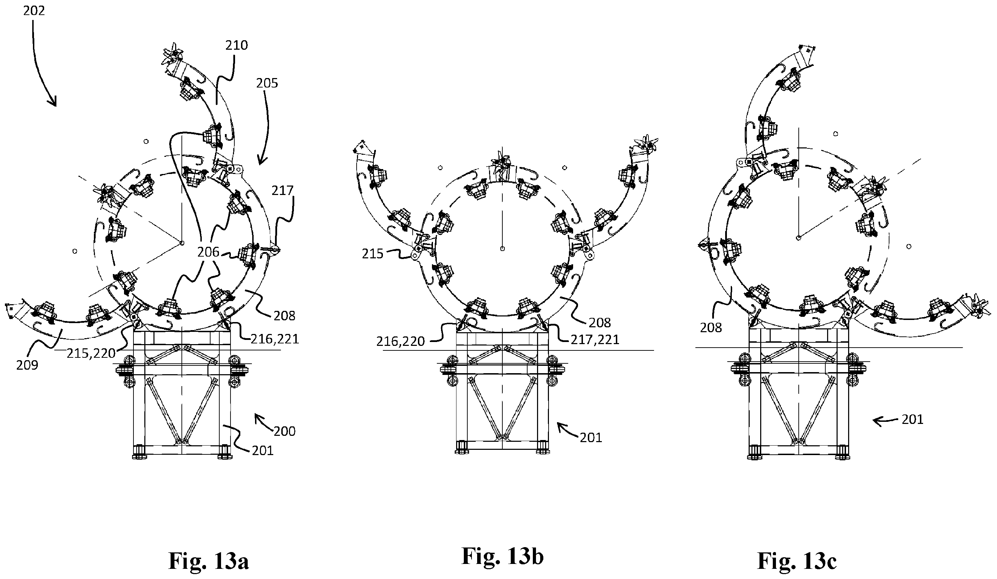

The figures 13A to 13C illustrate, in plan view, the second aspect of the disclosure.

The pile holding system 200 is configured to be mounted on a vessel, e.g. for installation of a pile adapted to support an offshore wind turbine, e.g. a monopile, the pile holding system comprising:
- a support assembly201 configured to be mounted on the vessel, e.g. on a deck of the vessel,
- a pile holder 202 mounted on the support assembly 201, wherein the pile holder is configured to hold a pile (not shown) in a vertical orientation, e.g. during lowering onto the seabed and during pile driving of the pile into the seabed.

The pile holder comprises at least one ring 205, which is provided with multiple pile engaging devices 206 distributed about a circumference of the ring, each pile engaging device being adapted to engage an exterior of a pile extending through the ring, e.g. each pile engaging device comprises one or more pile guiding rollers,
wherein the ring comprises a ring base 208 that is secured to the support assembly 201 and one or more pivotal jaws 209, 210, e.g. two semi-circular jaws, each jaw being pivotally mounted at an inner end thereof to the ring base and having an outer end, the one or more jaws being movable between a closed position, wherein the respective ring forms a closed annulus, and an opened position, in which an opening is present allowing for introduction of the pile into the pile holder.

The ring base 208 and the support assembly 201 are provided with cooperating releasable securing members that are configured to provide multiple distinct mounting angle positions, see figures 13A, 13B, 13C, seen in plan view, of the ring relative to the support assembly.

It is shown here that the cooperating releasable securing members comprise first securing members, e.g. eye members 215, 216, 217 integral with the ring base 208 and located at multiple distinct angle positions, e.g. at three distinct angle positions, seen in plan view, and second securing members 220,221, e.g. eye members, integral with the support assembly and located at multiple distinct angle positions, e.g. at two distinct angle positions, seen in plan view, so as to allow for three distinct mounting angle positions of the ring 205 relative to the support assembly.

In an embodiment, the cooperating releasable securing members comprise first eye members integral with the ring base, and second eye member integral with the support assembly, and wherein the cooperating releasable securing members comprise pins that are configured to be fitted through a set of aligned first and second eye members.

In an embodiment, the support assembly 201 is an X-Y motion compensation support assembly that is configured to provide compensation for motion of the vessel in a plane of the ring to maintain a predetermined X-Y location of the pile holder independent of motion of the vessel.

In an embodiment, the support assembly 201 comprises one or more first rails to be mounted on, or mounted on the vessel, e.g. on a deck of the vessel, a positioning frame movably supported on said one or more first rails in a first direction, where the positioning frame is provided with one or more second rails extending in a second direction, e.g. perpendicular to the first direction, and a support frame movably supported on said one or more second rails in said second direction, wherein the ring base of the ring of pile holder and the support frame are provided with said cooperating releasable securing members that are configured to provide multiple distinct mounting angle positions, seen in plan view, of the ring relative to the support frame.

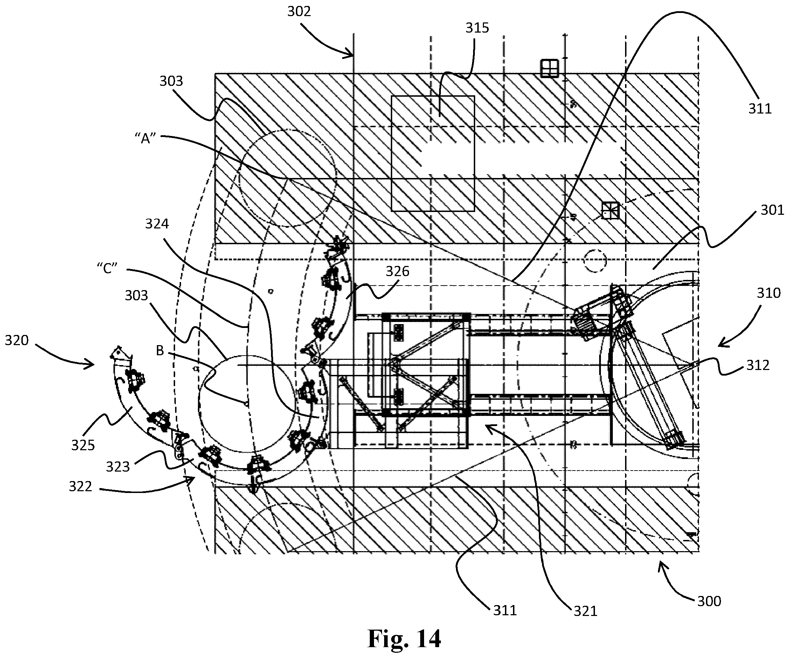

The third aspect of the disclosure is illustrated in figure 14.

In plan view, the figure 14 shows a part of a hull 300 of a vessel, e.g. a jackup vessel, having a deck 301 and a side 302. It is submitted that the deck 301 of the vessel is on one side of the side 302 of the vessel, while on the opposite side of the vessel is the sea

A crane 310 is erected on the deck of the vessel and has a boom 311 that is slewable by a slew drive of the crane about a vertical slew axis 312 and that is luffable about a boom axis by a luffing mechanism of the crane, which crane is configured to hoist and suspend the pile 303.

An upending tool 315 is mounted on said deck of the vessel within reach of the crane.

A pile holding system 320, distinct from said upending tool 315, is mounted on said deck of the vessel within reach of the crane, between the crane 310 and the side 302 of the vessel.

The pile holding system 320 comprises:
- a support assembly 321 configured to be mounted on the vessel, e.g. on a deck of the vessel, and
- a pile holder 322 mounted on the support assembly, wherein the pile holder is configured to hold a pile in a vertical orientation.

The pile holder 322 comprises at least one ring 323, which is provided with multiple pile engaging devices distributed about a circumference of the ring, each pile engaging device being adapted to engage an exterior of a pile extending through the ring, e.g. each pile engaging device comprises one or more pile guiding rollers, wherein the ring comprises a ring base 324 that is secured to the support assembly and one or more pivotal jaws 325,326, e.g. two semi-circular jaws, each jaw being pivotally mounted at an inner end thereof to the ring base and having an outer end, the one or more jaws being movable between a closed position, wherein the respective ring forms a closed annulus, and an opened position, in which an opening is present allowing for introduction of the pile into the pile holder,

The pile holding system 320 enables a method according to the third aspect of the disclosure, wherein the method comprises:
- upending of a pile 303 using the upending tool 315 to tiltable support a lower section of the pile 303 and the crane 310 to engage a lift an upper section of the pile, so that the pile is brought into vertical orientation at an upending position A relative to the hull and suspended from the crane,
- arranging the ring 323 of the pile holding system so that the vertically suspended pile 303 is laterally introducible into the opened annulus of the ring,
- closing the one or more jaws of the ring,
- lowering the pile onto the seabed and driving the pile into the seabed whilst the pile holder holds the pile in vertical orientation.

According to the third aspect of the disclosure, for said laterally introduction of the pile 303 into the opened annulus of the ring, into position B, the upending tool 315 and the ring 323 of the pile holding system are arranged such that transfer of the vertically suspended pile 303 by means of the crane 310 from the upending position into the opened annulus of the ring solely involves operation of the slew drive of the crane 310 so that the pile, seen in plan view, passes along a curved trajectory C having a radius about the slew axis 312 of the crane.

This significantly reduces complexity of said transfer, e.g. avoiding need to luff the boom during said transfer.

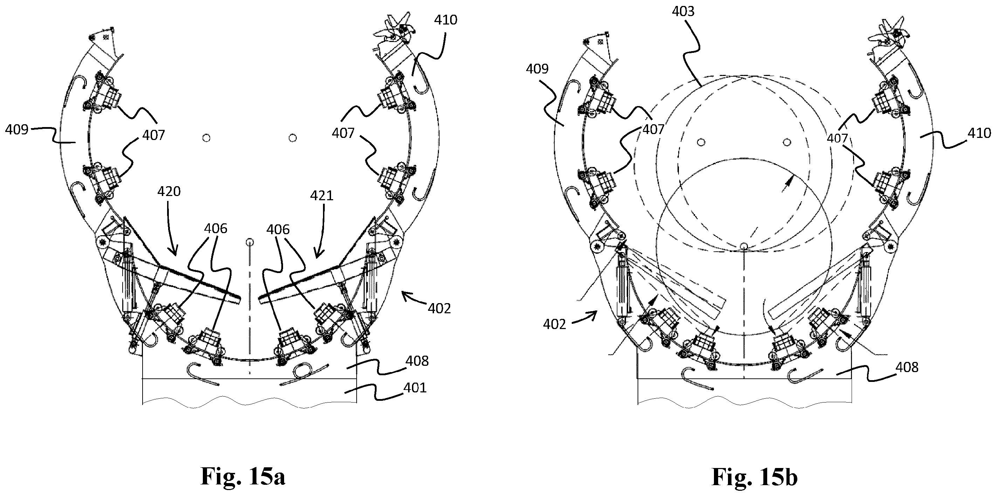

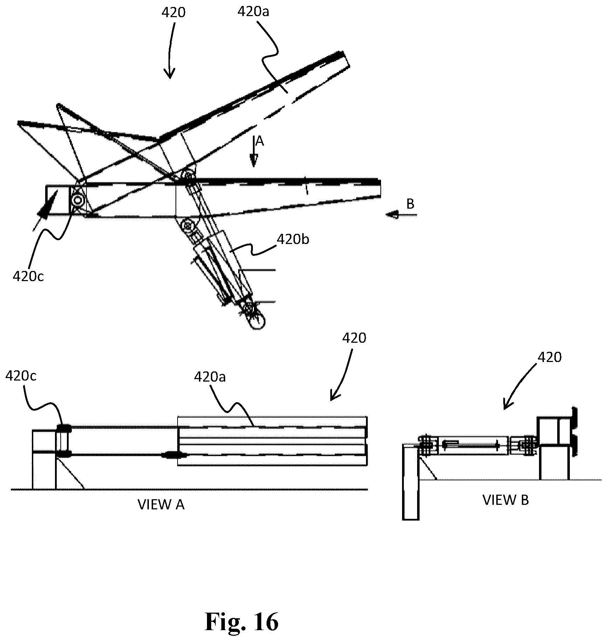

The figures 15A to 17B illustrate a pile holding system 400 comprising:
- a support assembly 401, e.g. as disclosed herein with reference to one or more of the other aspects, configured to be mounted on the vessel, e.g. on a deck of the vessel,
- a pile holder 402 mounted on the support assembly, wherein the pile holder is configured to hold a pile 403 in a vertical orientation,

wherein the pile holder comprises at least one ring, which is provided with multiple pile engaging devices 406, 407 distributed about a circumference of the ring, each pile engaging device being adapted to engage an exterior of a pile extending through the ring during installation of the pile into the seabed, e.g. each pile engaging device comprises one or more pile guiding rollers,
wherein the ring comprises a ring base 408 that is secured to the support assembly and one or more pivotal jaws 409, 410, e.g. two semi-circular jaws, each jaw being pivotally mounted at an inner end thereof to the ring base and having an outer end, the one or more jaws being movable between a closed position, wherein the respective ring forms a closed annulus, and an opened position, in which an opening is present allowing for lateral introduction of a vertically suspended pile into the opened annulus of the ring,
wherein the ring base 408 is provided, in addition to one or more of said multiple pile engaging devices 406, 407, with one or more distinct bumper devices 420, 421 that are configured to act as a bumper for the pile 403 when being introduced laterally into the opened annulus of the ring,
wherein the one or more bumper devices 420, 421 are each embodied with a mobile bum per member 420a, 421a and an associated bumper actuator 420b, 421b, each bumper device being configured to move the bumper member into an operative position that is inward of the one or more pile engaging devices on the ring base so that the pile stays dear of said one or more pile engaging devices during said lateral introduction and that each bumper device being configured to move the bumper member into a non- operative position that is outward of the one or more pile engaging devices on the ring base so that the pile is positionable by means of the pile engaging devices.

Each mobile bumper member comprises a bumper beam 420a, 421a that is at one end pivotally secured to the ring base about a vertical axis 420c, 421c, the actuator 420b, 421b is configured to pivot the bumper beam relative to the ring base.

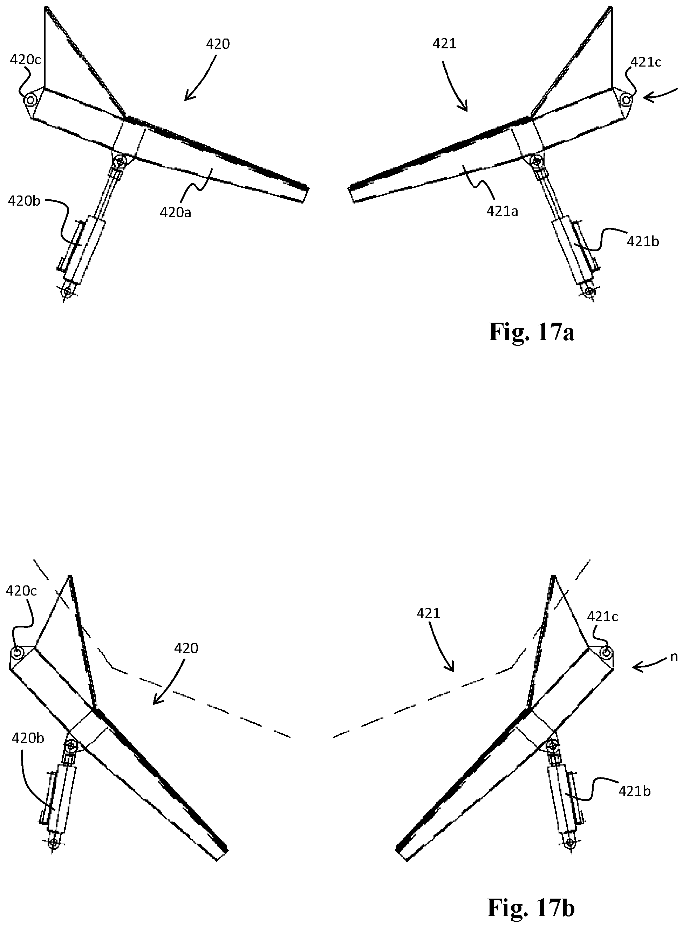

The ring base is provided with two bumper devices 420, 421, each bumper device comprising a bumper beam that is at one end pivotally secured to an end portion of the ring base about a vertical axis, so that the free ends of the bumper beams are directed towards one another seen in plan view, and the actuator is configured to pivot the bumper beam relative to the ring base. Seen in plan view, figure 17A shows the bumpers in an operative position, while figure 17B shows the bumpers in a non-operative position.

Seen in plan view, each bumper beam 420a, 421a has a front side facing the pile that comprises a first front side portion and a second front side portion that are inclined relative to one another.

## Claims

1. Pile holding system (320), configured to be mounted on a vessel, e.g. for installation of a pile (303) adapted to support an offshore wind turbine, e.g. a monopile, the pile holding system comprising:
- a support assembly (321), configured to be mounted on the vessel, e.g. on a deck (301) of the vessel,
- a pile holder (322) supported by the support assembly, wherein the pile holder is configured to hold a pile (303) in a vertical orientation,
wherein the pile holder (322) comprises at least one ring (323), which ring is provided with multiple pile engaging devices distributed about a circumference of the ring, each pile engaging device being adapted to engage an exterior of a pile extending through the ring, e.g. each pile engaging device comprises one or more pile guiding rollers,
wherein the ring comprises a ring base (324) and one or more pivotal jaws (325,326), e.g. two semi-circular jaws, each jaw being pivotally mounted at an inner end thereof to the ring base and having an outer end, the one or more jaws being movable between a closed position, wherein the respective ring forms a closed annulus having a central axis, and an opened position, in which an opening is present allowing for introduction of the pile into the pile holder,
**characterized in that** the ring base (324) is movably supported by the support assembly (321), such that the ring (323) can rotate about the central axis relative to the support assembly, to thus adjust the position of the opening of the ring relative to the support assemblyand **in that** the ring is provided with a semi-circular track, having a center that coincides with the central axis of the ring, wherein the semi-circular track is received in a guide mounted on the support assembly, such that by moving the track through the guide, the ring is rotated about the central axis.

2. Pile holding system (320) according to claim 1, wherein the ring is rotatable about the central axis over an angle of at least 40 degrees, preferably of at least 60 degrees.

3. Pile holding system (320) according to any one or more of the preceding claims, wherein the ring is rotatable about the central axis from a central position, in which the opening faces away from the support assembly and the ring base is positioned between the opening and the support assembly, towards the left, i.e. counter clockwise when seen in plan view, over an angle of at least 20 degrees, preferably of at least 30 degrees, for example of at least 40 degrees, and towards the right, i.e. clockwise when seen in plan view, over an angle of at least 20 degrees, preferably of at least 30 degrees, for example of at least 40 degrees.

4. Pile holding system (320) according to any one or more of the preceding claims, wherein the ring is rotatable over an angle of one hundred and eighty degrees.

5. Pile holding system (320) according to any one or more of the preceding claims, wherein the support assembly is mounted on a semi-circular track, which semi-circular track is configured to be mounted or is mounted on the deck of a vessel, wherein the semi-circular track has a center that coincides with the central axis of the ring of the pile holding system.

6. Pile holding system (320) according to any one or more of the preceding claims, wherein the pile engagement devices of the pile holding system are mounted on semi-circular tracks provided on the ring, the pile engagement holding devices thereby being movable relative to the ring, about the central axis of the ring, allowing for moving the pile engagement devices of the ring in a counter clockwise direction relative to the ring, while the ring is rotated clockwise, or vice versa respectively.

7. Method for installation of a pile (303) of an offshore wind turbine, wherein use is made of
- a vessel having a hull with a deck and a side, e.g. a jack-up vessel,
- a crane erected on the deck of the vessel and having a boom that is slewable by a slew drive of the crane about a vertical slew axis and that is luffable about a boom axis by a luffing mechanism of the crane, which crane is configured to hoist and suspend the pile,
- an upending tool mounted on said deck of the vessel within reach of the crane,
- a pile holding system (320), distinct from said upending tool, mounted on said deck of the vessel within reach of the crane, wherein the pile holding system is according to any one or more of the preceding claims,
wherein the method comprises:
- upending of a pile (303) using the upending tool to tiltable support a lower section of the pile and the crane to engage a lift an upper section of the pile, so that the pile is brought into vertical orientation at an upending position relative to the hull and suspended from the crane,
- arranging the ring (323) of the pile holding system (320) so that the vertically suspended pile is laterally introducible into the opened annulus of the ring,
- closing the one or more jaws (325,326) of the ring,
- lowering the pile (303) onto the seabed and driving the pile into the seabed whilst the pile holder holds the pile in vertical orientation,
wherein for said lateral introduction of the pile into the opened annulus of the ring (323), the upending tool and the ring (323) of the pile holding system are arranged such that transfer of the vertically suspended pile by means of the crane from the upending position into the opened annulus of the ring solely involves operation of the slew drive of the crane so that the pile, seen in plan view, passes along a curved trajectory having a radius about the slew axis of the crane.

## Patentansprüche

1. Pfahlhalterungssystem (320), das dazu ausgelegt ist, auf einem Schiff montiert zu werden, z. B. zur Installation eines Pfahls (303), der dazu eingerichtet ist, eine Offshore-Windkraftanlage abzustützen, z. B. ein Monopile, wobei das Pfahlhalterungssystem Folgendes umfasst:
- eine Abstützanordnung (321), die dazu ausgelegt ist, auf dem Schiff, z. B. auf einem Deck (301) des Schiffs, montiert zu werden,
- eine Pfahlhalterung (322), die von der Abstützanordnung abgestützt wird, wobei die Pfahlhalterung dazu ausgelegt ist, einen Pfahl (303) in einer vertikalen Ausrichtung zu halten,
wobei die Pfahlhalterung (322) mindestens einen Ring (323) umfasst, wobei der Ring mit mehreren Pfahleingriffsvorrichtungen versehen ist, die über einen Umfang des Rings verteilt sind, wobei jede Pfahleingriffsvorrichtung dazu eingerichtet ist, eine Außenseite eines Pfahls, der sich durch den Ring erstreckt, in Eingriff zu nehmen, z. B. umfasst jede Pfahleingriffsvorrichtung eine oder mehrere Pfahlführungsrollen,
wobei der Ring eine Ringbasis (324) und eine oder mehrere Schwenkbacken (325, 326), z. B. zwei halbkreisförmige Backen, umfasst, wobei jede Backe an einem inneren Ende davon schwenkbar an der Ringbasis montiert ist und ein äußeres Ende aufweist, wobei die eine oder die mehreren Backen zwischen einer geschlossenen Position, in der der jeweilige Ring einen geschlossenen Ringraum mit einer zentralen Achse bildet, und einer geöffneten Position, in der eine Öffnung vorhanden ist, die das Einsetzen des Pfahls in die Pfahlhalterung ermöglicht, beweglich sind,
**dadurch gekennzeichnet, dass** die Ringbasis (324) durch die Abstützanordnung (321) beweglich gelagert ist, so dass sich der Ring (323) relativ zur Abstützanordnung um die Mittelachse drehen kann, um somit die Position der Öffnung des Rings relativ zur Abstützanordnung einzustellen, und dadurch, dass der Ring mit einer halbkreisförmigen Bahn versehen ist, die einen Mittelpunkt aufweist, der mit der Mittelachse des Rings zusammenfällt, wobei die halbkreisförmige Bahn in einer Führung aufgenommen ist, die an der Abstützanordnung montiert ist, so dass durch das Bewegen der Bahn durch die Führung der Ring um die Mittelachse gedreht wird.

2. Pfahlhalterungssystem (320) nach Anspruch 1, wobei der Ring in einem Winkel von mindestens 40 Grad, vorzugsweise von mindestens 60 Grad, um die Mittelachse drehbar ist.

3. Pfahlhalterungssystem (320) nach einem oder mehreren der vorhergehenden Ansprüche, wobei der Ring aus einer Mittelposition, in der die Öffnung von der Abstützanordnung abgewandt ist und die Ringbasis zwischen der Öffnung und der Abstützanordnung positioniert ist, nach links, d. h. in der Draufsicht gesehen entgegen dem Uhrzeigersinn, in einem Winkel von mindestens 20 Grad, vorzugsweise von mindestens 30 Grad, beispielsweise von mindestens 40 Grad, und nach rechts, d. h. in der Draufsicht gesehen im Uhrzeigersinn, in einem Winkel von mindestens 20 Grad, vorzugsweise von mindestens 30 Grad, beispielsweise von mindestens 40 Grad, um die Mittelachse drehbar ist.

4. Pfahlhalterungssystem (320) nach einem oder mehreren der vorhergehenden Ansprüche, wobei der Ring in einem Winkel von einhundertachtzig Grad drehbar ist.

5. Pfahlhalterungssystem (320) nach einem oder mehreren der vorhergehenden Ansprüche, wobei die Abstützanordnung auf einer halbkreisförmigen Bahn montiert ist, wobei die halbkreisförmige Bahn dazu ausgelegt ist, auf dem Deck eines Schiffs montiert zu werden oder darauf montiert ist, wobei die halbkreisförmige Bahn einen Mittelpunkt aufweist, der mit der Mittelachse des Rings des Pfahlhalterungssystems zusammenfällt.

6. Pfahlhalterungssystem (320) nach einem oder mehreren der vorhergehenden Ansprüche, wobei die Pfahleingriffsvorrichtungen des Pfahlhalterungssystems auf am Ring vorgesehenen halbkreisförmigen Bahnen montiert sind, wobei die Pfahleingriffshaltevorrichtungen dadurch relativ zum Ring um die Mittelachse des Rings beweglich sind, wodurch eine Bewegung der Pfahleingriffsvorrichtungen des Rings relativ zum Ring entgegen dem Uhrzeigersinn ermöglicht wird, während der Ring im Uhrzeigersinn gedreht wird, oder umgekehrt.

7. Verfahren zur Installation eines Pfahls (303) einer Offshore-Windkraftanlage, wobei Folgendes zum Einsatz kommt
- ein Schiff mit einem Rumpf mit einem Deck und einer Seitenwand, z. B. ein Errichterschiff,
- ein Kran, der auf dem Schiffsdeck aufgestellt ist und einen Ausleger aufweist, der durch einen Schwenkantrieb des Krans um eine vertikale Schwenkachse schwenkbar ist und der durch einen Wippmechanismus des Krans um eine Auslegerachse wippbar ist, wobei der Kran zum Anheben und Aufhängen des Pfahls ausgelegt ist,
- ein auf dem Schiffsdeck in Reichweite des Krans montiertes Aufrichtungswerkzeug,
- ein Pfahlhalterungssystem (320), das sich vom Aufrichtungswerkzeug unterscheidet und auf dem Schiffsdeck in Reichweite des Krans montiert ist, wobei das Pfahlhalterungssystem einem oder mehreren der vorhergehenden Ansprüche entspricht,
wobei das Verfahren Folgendes umfasst:
- Aufrichten eines Pfahls (303) mit dem Aufrichtungswerkzeug, um einen unteren Abschnitt des Pfahls kippbar abzustützen und mit dem Kran in einen oberen Abschnitt des Pfahls einzugreifen, so dass der Pfahl an einer Aufrichtungsposition relativ zum Rumpf in eine vertikale Ausrichtung gebracht und am Kran aufgehängt wird,
- Anordnen des Rings (323) des Pfahlhalterungssystems (320) derart, dass der vertikal aufgehängte Pfahl in den geöffneten Ringraum des Rings seitlich einsetzbar ist;
- Schließen der einen oder mehreren Backen (325, 326) des Rings,
- Absenken des Pfahls (303) auf den Meeresboden und Eintreiben des Pfahls in den Meeresboden, während die Pfahlhalterung den Pfahl in der vertikalen Ausrichtung hält,
wobei für das seitliche Einsetzen des Pfahls in den geöffneten Ringraum des Rings (323) das Aufrichtungswerkzeug und der Ring (323) des Pfahlhalterungssystems so angeordnet sind, dass die Übergabe des vertikal aufgehängten Pfahls mittels des Krans von der Aufrichtungsposition in den geöffneten Ringraum des Rings ausschließlich die Betätigung des Schwenkantriebs des Krans beinhaltet, so dass der Pfahl, in der Draufsicht gesehen, entlang einer gekrümmten Bahn mit einem Radius um die Schwenkachse des Krans verläuft.

## Revendications

1. Système de maintien de pieu (320), conçu pour être monté sur un navire, par exemple pour l'installation d'un pieu (303) conçu pour supporter une éolienne offshore, par exemple un monopieu, le système de maintien de pieu comprenant :
- un ensemble support (321) conçu pour être monté sur le navire, par exemple sur un pont (301) du navire,
- un support de pieu (322) supporté par l'ensemble support, le support de pieu étant conçu pour maintenir un pieu (303) dans une orientation verticale, le support de pieu (322) comprenant au moins un anneau (323), lequel anneau est pourvu de multiples dispositifs de mise en prise de pieu répartis sur une circonférence de l'anneau, chaque dispositif de mise en prise de pieu étant conçu pour venir en prise avec l'extérieur d'un pieu s'étendant à travers l'anneau, par exemple chaque dispositif de mise en prise de pieu comprenant un ou plusieurs rouleaux de guidage de pieu,
l'anneau comprenant une base d'anneau (324) et une ou plusieurs mâchoires pivotantes (325, 326), par exemple deux mâchoires semi-circulaires, chaque mâchoire étant montée pivotante au niveau d'une extrémité intérieure de celle-ci sur la base d'anneau et comportant une extrémité extérieure, la ou les mâchoires étant mobiles entre une position fermée, dans laquelle l'anneau respectif forme un espace annulaire fermé comportant un axe central, et une position ouverte, dans laquelle une ouverture est présente permettant l'introduction du pieu dans le support de pieu,
**caractérisé en ce que** la base d'anneau (324) est supportée mobile par l'ensemble support (321), de sorte que l'anneau (323) puisse tourner autour de l'axe central par rapport à l'ensemble support, pour régler ainsi la position de l'ouverture de l'anneau par rapport à l'ensemble support et **en ce que** l'anneau est pourvu d'une piste semi-circulaire, comportant un centre qui coïncide avec l'axe central de l'anneau, la piste semi-circulaire étant reçue dans un guide monté sur l'ensemble support, de sorte que, par déplacement de la piste à travers le guide, l'anneau tourne autour de l'axe central.

2. Système de maintien de pieu (320) selon la revendication 1, l'anneau pouvant tourner autour de l'axe central sur un angle d'au moins 40 degrés, de préférence d'au moins 60 degrés.

3. Système de maintien de pieu (320) selon l'une quelconque ou plusieurs des revendications précédentes, l'anneau pouvant tourner autour de l'axe central à partir d'une position centrale, dans laquelle l'ouverture fait face à l'opposé de l'ensemble support et la base d'anneau est positionnée entre l'ouverture et l'ensemble support, vers la gauche, c'est-à-dire dans le sens inverse des aiguilles d'une montre selon une vue en plan, sur un angle d'au moins 20 degrés, de préférence d'au moins 30 degrés, par exemple d'au moins 40 degrés, et vers la droite, c'est-à-dire dans le sens des aiguilles d'une montre selon une vue en plan, sur un angle d'au moins 20 degrés, de préférence d'au moins 30 degrés, par exemple d'au moins 40 degrés.

4. Système de maintien de pieu (320) selon l'une quelconque ou plusieurs des revendications précédentes, l'anneau pouvant tourner sur un angle de cent quatre-vingts degrés.

5. Système de maintien de pieu (320) selon l'une quelconque ou plusieurs des revendications précédentes, l'ensemble support étant monté sur une piste semi-circulaire, laquelle piste semi-circulaire est conçue pour être montée ou est montée sur le pont d'un navire, la piste semi-circulaire comportant un centre qui coïncide avec l'axe central de l'anneau du système de maintien de pieu.

6. Système de maintien de pieu (320) selon l'une quelconque ou plusieurs des revendications précédentes, les dispositifs de mise en prise de pieu du système de maintien de pieu étant montés sur des pistes semi-circulaires situées sur l'anneau, les dispositifs de maintien de mise en prise de pieu étant ainsi mobiles par rapport à l'anneau, autour de l'axe central de l'anneau, permettant le déplacement des dispositifs de mise en prise de pieu de l'anneau dans le sens inverse des aiguilles d'une montre par rapport à l'anneau, tandis que l'anneau est tourné dans le sens des aiguilles d'une montre, ou vice versa respectivement.

7. Procédé d'installation d'un pieu (303) d'une éolienne offshore, utilisation étant faite
- d'un navire ayant une coque dotée d'un pont et d'un flanc, par exemple un navire auto-élévateur,
- d'une grue érigée sur le pont du navire et comportant une flèche qui peut pivoter par un entraînement de pivotement de la grue autour d'un axe de pivotement vertical et qui peut être soulevée autour d'un axe de flèche par un mécanisme de levage de la grue, laquelle grue est conçue pour lever et suspendre le pieu,
- d'un outil de soulèvement monté sur ledit pont du navire à portée de la grue,
- d'un système de maintien de pieu (320), distinct dudit outil de soulèvement, monté sur ledit pont du navire à portée de la grue, le système de maintien de pieu étant conçu selon l'une quelconque ou plusieurs des revendications précédentes,
le procédé comprenant les étapes consistant à :
- soulever un pieu (303) en utilisant l'outil de soulèvement pour soutenir inclinable une section inférieure du pieu et la grue pour commencer un soulèvement d'une section supérieure du pieu, de sorte que le pieu est amené en orientation verticale dans une position soulevée par rapport à la coque et suspendu à la grue,
- disposer l'anneau (323) du système de maintien de pieu (320) de sorte à ce que le pieu suspendu verticalement puisse être introduit latéralement dans l'espace annulaire ouvert de l'anneau,
- fermer la ou les mâchoires (325, 326) de l'anneau,
- abaisser le pieu (303) sur le fond marin et enfoncer le pieu dans le fond marin pendant que le support de pieu maintient le pieu en orientation verticale,
pour ladite introduction latérale du pieu dans l'espace annulaire ouvert de l'anneau (323), l'outil en saillie et l'anneau (323) du système de maintien du pieu étant disposés de sorte que le transfert du pieu suspendu verticalement au moyen de la grue de la position en saillie dans l'espace annulaire ouvert de l'anneau implique uniquement l'actionnement de la commande de pivotement de la grue de sorte que le pieu, selon une vue en plan, passe le long d'une trajectoire courbe ayant un rayon autour de l'axe de pivotement de la grue.
